(19) Europäisches Patentamt
European Patent Office
Office européen des brevets

(11) **EP 2 707 827 B1**

(12) **EUROPEAN PATENT SPECIFICATION**

(45) Date of publication and mention
of the grant of the patent:
**11.03.2020 Bulletin 2020/11**

(51) Int Cl.:
**G01V 9/00** $^{(2006.01)}$    **G06F 17/18** $^{(2006.01)}$
**G01V 99/00** $^{(2009.01)}$

(21) Application number: **12781781.5**

(22) Date of filing: **10.05.2012**

(86) International application number:
**PCT/US2012/037227**

(87) International publication number:
**WO 2012/154912 (15.11.2012 Gazette 2012/46)**

(54) **SYSTEM AND METHOD FOR CHARACTERIZING RESERVOIR FORMATION EVALUATION UNCERTAINTY**

SYSTEM UND VERFAHREN ZUR KENNZEICHNUNG VON UNSICHERHEITEN BEI DER BEWERTUNG EINER RESERVOIRFORMIERUNG

SYSTÈME ET PROCÉDÉ POUR CARACTÉRISER UNE INCERTITUDE D'ÉVALUATION DE FORMATION DE RÉSERVOIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2011 US 201161484398 P**

(43) Date of publication of application:
**19.03.2014 Bulletin 2014/12**

(73) Proprietor: **Chevron U.S.A. Inc.**
**San Ramon, CA 94583 (US)**

(72) Inventors:
• **THORNE, Julian**
**San Ramon**
**California 94583 (US)**
• **BILODEAU, Bruce**
**San Ramon**
**California 94583 (US)**
• **CLAVAUD, Jean-Baptiste**
**San Ramon**
**California 94583 (US)**

(74) Representative: **Haseltine Lake Kempner LLP**
**Redcliff Quay**
**120 Redcliff Street**
**Bristol BS1 6HU (GB)**

(56) References cited:
**US-A1- 2010 299 126     US-A1- 2010 299 126**
**US-A1- 2010 326 669     US-B2- 7 219 078**
**US-B2- 7 526 413**

• **Naeem Alshehri ET AL: "Reservoir Uncertainty Assessment", CCG Annual Report 11, 1 January 2009 (2009-01-01), XP055208649, Retrieved from the Internet: URL:http://www.ccgalberta.com/ccgresources /report11/2009-207_appropriate_scale_for_r eservoir_uncertainty.pdf [retrieved on 2015-08-20]**
• **Grigore Albeanu: "ON USING BOOTSTRAP APPROACH FOR UNCERTAINTY ESTIMATION", The First International Proficiency Testing Conference, 13 October 2007 (2007-10-13), XP055208648, Retrieved from the Internet: URL:http://prev.pt-conf.org/proceeding/31_ Albeanu_UM_P_P0102.pdf [retrieved on 2015-08-20]**

**Description**

**FIELD OF THE INVENTION**

The present invention relates generally to a system and method for characterizing reservoir formation evaluation uncertainty, and in particular, a system and method for spatially bootstrapping to characterize the uncertainty of reservoir formation evaluation.

**BACKGROUND OF THE INVENTION**

Reservoir properties can be derived from well logs, e.g., wireline, logging-while-drilling (LWD) or cased-hole logs, etc., by using petrophysical models that relate petrophysical parameters such as water salinity, temperature, density of the grain, mineralogical composition, etc., and well logs to the desired final reservoir properties such as porosity, saturation, etc. Examples of such petrophysical models can be expressed generally in the form of Equation 1:

$$\text{Reservoir Property}_n = f(\log_1 \ldots \log_k, \; \text{Parameter}_1 \; \cdots \; \text{Parameter}_n \quad \text{(Equation 1)}$$

A specific example for porosity can be expressed in the form of Equation 2:

$$\text{Porosity} = \frac{\text{RHOB}_{\text{grain}} - \text{RHOB}_{\text{log measured}}}{\text{RHOB}_{\text{grain}} - \text{RHOB}_{\text{fluid}}} \quad \text{(Equation 2)}$$

where $\text{RHOB}_{\text{grain}}$ and $\text{RHOB}_{\text{fluid}}$ are parameters that are laboratory measurements or best estimates, and where $\text{RHOB}_{\text{log measured}}$ is the well log measurement itself.

Potentially many of these equations, either one by one (deterministic step by step approach) or simultaneously (inversion of all equations at the same time in a probabilistic fashion using modeling tools such as ELAN™ or MinSolve™), must be solved to properly characterize reservoir properties one. This requires the knowledge of all parameters that go into a model, i.e., "input model parameters," some of which may introduce model uncertainties and may ultimately increase volumetric uncertainty.

An accurate assessment of volumetric uncertainty is critical to determining the uncertainty of reserves estimates and developing an effective uncertainty management plan. Conventional Monte Carlo methods for estimating the uncertainties of reservoir properties can lead to highly subjective estimates of uncertainty because they are calculated from input model parameter uncertainties. Typically, this requires a petrophysicist to estimate an uncertainty range for an input model parameter based on the range of values obtained from a core analyses or published literature.

Conventional "bootstrapping" methods, though objective, assume incorrectly that each property data collected is an independent measurement. "Bootstrapping" generally refers to statistical resampling methods that allow uncertainty in data to be assessed from the data itself, in other words, given the independent observations $Z_i$, i=1,...,n and a calculated statistic S, e.g., the mean, what is uncertainty of S? This can be accomplished in accordance with the following procedure: (a) draw n values $z_i$, i=1,...,n from the original data with replacement; (b) calculate the statistic S' from the "bootstrapped" sample; and (3) repeat L times to build up a distribution of the uncertainty in S.

Known methods for uncertainty assessment are disclosed in Naeem Alshehri et al: "Reservoir uncertainty assessment", CCG Annual Report 11 (2009); US2010/299126 entitled "*Method for uncertainty quantification in the performance and risk assessment of a carbon dioxide storage site*"; and Grigore Albeanu: "On using bootstrap approach for uncertainty estimation", The First International Proficiency Testing Conference, 11th-13th October 2007, for example.

Thus conventional approaches require accurate "a priori" knowledge of the ranges for given input model parameters, and they do not ensure that resulting ranges of reservoir properties match what is measured or inferred from reference data (core data for example). Conventional methods may require multiple iterations that are expensive and time consuming and which may not yield accurate reserve estimates.

**SUMMARY OF THE INVENTION**

The present invention is defined by the appended independent claims; specific embodiments are defined by the dependent claims.

A computer-implemented method outside the claimed scope of the present invention is provided for characterizing hydrocarbon reservoir formation evaluation uncertainty. The method includes the steps of: accessing petrophysical reference data; deriving an *a-priori* uncertainty distribution of petrophysical model input parameters and a non-uniqueness of calibration of field data to the petrophysical reference data; deriving multiple petrophysical model solutions using the *a-priori* uncertainty distribution of petrophysical model input parameters that fit within a predetermined tolerance a plurality of the petrophysical reference data; deriving a *posteriori* distribution of input model parameters from the multiple petrophysical model solutions; and applying the *posteriori* distribution of petrophysical model input parameters to derive an *a-priori* uncertainty distribution of selected petrophysical model output.

In an embodiment of the present invention, a computer-implemented method for characterizing hydrocarbon reservoir formation evaluation uncertainty includes the steps of: inputting petrophysical reference data comprising substantially spatially correlated data; choosing N subsets of data, where N≥2, the N subsets of data each being substantially less spatially correlated than the petrophysical reference data but still representative of the petrophysical reference data; and applying a bootstrap process on each of the N subsets of data to obtain a bootstrap data set from each of the N subsets of data. For each of the bootstrap datasets, the method further includes the steps of inverting a petrophysical model to generate a set of optimized petrophysical model input parameter values, wherein the inverting step includes varying model input parameter values for the petrophysical model within user-defined ranges such that output of the petrophysical model matches is a best fit to petrophysical reference data; collecting the set of optimized petrophysical model input parameters; performing a statistical significance test the set of optimized petrophysical model input parameters and the corresponding fit to the petrophysical reference data; repeating the bootstrap process and inverting step M times to generate MxN sets of optimized petrophysical model input parameters; selecting from MxN sets of optimized petrophysical model input parameters those sets optimized petrophysical model input parameters that satisfy at predetermined criteria for statistical significance; executing the petrophysical model using the selected sets of optimized petrophysical model input parameters on a plurality of data within a hydrocarbon reservoir formation; and determining selected percentiles representative of selected reservoir uncertainties from the distribution of values produced by different sets of optimized petrophysical model input parameters.

In another embodiment, the method utilizes independent data spatial bootstrap to quantitatively derive P10, P50 and P90 reservoir property logs and zonal averages. The method utilizes at least a "baseline" dataset that is assumed to be correct (e.g., core data), and determines the distribution of possible input parameter values that provide the most optimal solution to fit the log analysis to the core data. In one embodiment, independent data spatial bootstrap method can be applied to determine the uncertainty of porosity and saturation.

In another embodiment, a system is provided for characterizing hydrocarbon reservoir formation evaluation uncertainty. The system includes a data source having petrophysical reference data, and a computer processor operatively in communication with the data source and having a processor configured to access the petrophysical reference data and to execute a computer executable code responsive to the petrophysical reference data. In one embodiment, the computer executable code includes: a first code for accessing the petrophysical reference data; a second code for applying a variogram to the sample petrophysical data to select N subsets of data, where N≥2, the N subsets of data being substantially less correlated than the sample petrophysical data; a third code for applying a spatial bootstrap process on each of the N subsets of data to obtain a plurality of bootstrap data sets from each of the N subsets of data; a fourth code for inverting, each of the N subsets of data, a petrophysical model to generate a set of optimized petrophysical model input parameter values, wherein the inverting code varies model input parameter values for the petrophysical model within user-defined ranges such that output of the petrophysical model matches the petrophysical reference data within a predetermine threshold; a fifth code for collecting the set of optimized petrophysical model input parameters values; a sixth code for performing a statistical significance test on each set of optimized petrophysical model input parameter values; a seventh code for causing the spatial bootstrap process and inverting to be repeated M times to generate MxN sets of optimized petrophysical model input parameter values; an eight code for selecting from MxN sets of optimized petrophysical model input parameter values those sets optimized petrophysical model input parameter values that satisfy at predetermined criteria for the statistical significance test; a ninth code for executing the petrophysical model using the selected sets of optimized petrophysical model input parameter values; and a tenth code for determining selected percentiles representative of selected reservoir uncertainties.

The present invention provides a user the ability to characterize reservoir property uncertainty without: (1) requiring accurate "a priori" knowledge of the range of input model parameters (physically possible range is all that is required); and (2) without running lengthy Monte-Carlo or other similar types of simulations to provide the range of parameters that match the reference data (e.g., core data).

The present invention relies on bootstrap technology and includes taking a subset of reference data (e.g., core data), inverting a petrophysical model using well logs and the reference data and, and varying input model parameter values within user-defined ranges such that the output of the petrophysical model matches the reference data. Advantageously, this yields a set of parameters where the petrophysical model output, porosity for example, is a statistically good to the petrophysical reference data. This result can be achieved by inversion or other known optimization technique.

By repeating the steps of the present invention multiple times, multiple sets of input model parameters can be generated thus resulting in a posteriori distribution for each of the input model parameters. At the end of this process, we have a set of *posteriori* uncertainty distributions for all the model parameters without the need to have an accurate *a-priori* uncertainty distribution.

## BRIEF DESCRIPTION OF THE DRAWINGS

A description of the present invention is made with reference to specific embodiments thereof as illustrated in the appended drawings. The drawings depict only typical embodiments of the invention and therefore are not to be considered limiting of its scope.

FIG. 1 shows a method for characterizing reservoir formation evaluation uncertainty in accordance with an embodiment of the present invention.
FIG. 2 shows a user interface for inputting variogram and core data parameters in accordance with an embodiment of the present invention.
FIG. 3 shows a user interface for inputting *a-priori* parameter ranges for optimizing petrophysical model parameters in accordance with an embodiment of the present invention.
FIGS. 4a and 4b are exemplary outputs from step 22 of FIG. 1; FIG. 4a is F-Test histograms in accordance with the present invention and FIG. 4b shows exemplary spatially bootstrapped optimized petrophysical model input parameters for MxN=100 iterations of steps 16 and 20 of FIG. 1.
FIG. 5 shows exemplary histograms for optimized petrophysical model input parameters in accordance with the present invention.
FIG. 6 shows exemplary well logs for selected reservoir properties as determined by a petrophysical model using the optimized petrophysical model input parameters in accordance with the present invention.
FIG. 7 shows an exemplary well log and related core sample data for a selected reservoir property.

## DETAILED DESCRIPTION OF THE INVENTION

Embodiments of the present invention for characterizing reservoir formation evaluation uncertainty are now described with reference to the appended drawings. The invention can be practiced as any one of or combination of hardware and software, including but not limited to a system (including a computer processor), a method (including a computer implemented method), an apparatus, an arrangement, a computer readable medium, a computer program product, a graphical user interface, a web portal, or a data structure tangibly fixed in a computer readable memory. An article of manufacture for use with a computer processor, such as a CD, pre-recorded disk or computer program storage medium having program code residing therein, also falls within the scope of the present invention.

Applications of the present invention include but are not limited to the characterization of porosity and saturation in a subterranean hydrocarbon reservoir. The appended drawings illustrate only typical embodiments of the present invention and therefore are not to be considered limiting of its scope and breadth.

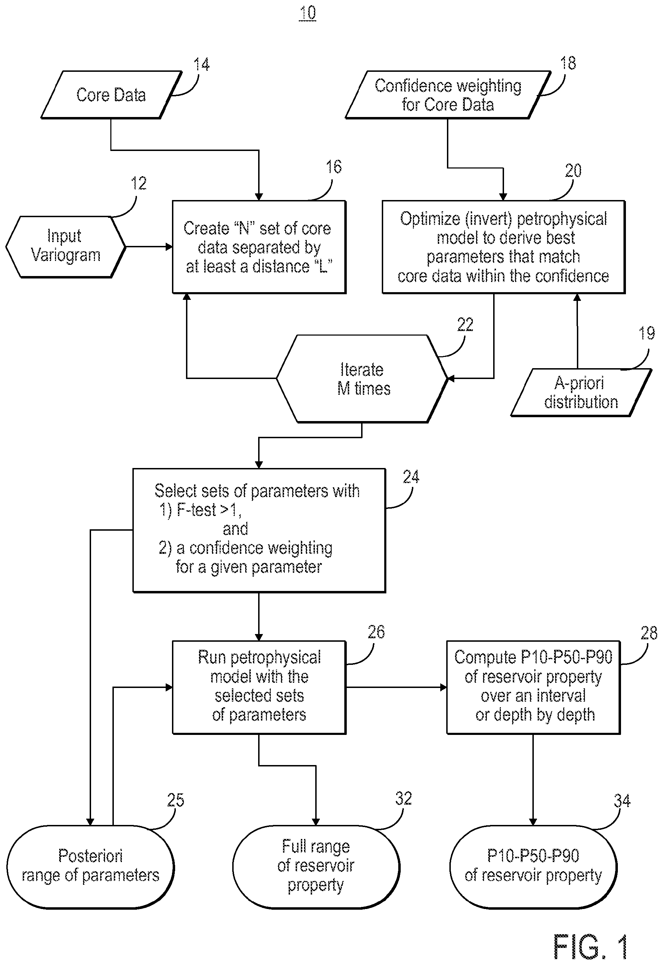

FIG. 1 shows an exemplary method 10 for characterizing reservoir formation evaluation uncertainty in accordance with the present invention. Generally, the method of the present invention includes the steps of: accessing petrophysical reference data; deriving an *a-priori* uncertainty distribution of petrophysical model input parameters and a non-uniqueness of calibration of field data, such as but not limited to well log, wireline log and logging while drilling (LWD) data, to the petrophysical reference data, such as but not limited to core, more accurate set of logs, complete log suite, etc.; deriving multiple petrophysical model solutions using the *a-priori* uncertainty distribution of petrophysical model input parameters that fit within a given tolerance a plurality of the petrophysical reference data; deriving a *posteriori* distribution of input model parameters from the multiple petrophysical model solutions; and applying the *posteriori* distribution of petrophysical model input parameters to derive an *a-priori* uncertainty distribution of selected petrophysical model outputs.

In one embodiment, the method first includes providing a correlation length L and selected petrophysical reference data (e.g., core data, sample data, etc.), steps 12 and 14 respectively, to create N subsets of randomly selected petrophysical reference data that are spatially independent, i.e., separated by at least a correlation length L, step 16. Step 14 includes providing petrophysical reference or sample data, which for example, may include cased hole samples or already assigned samples in a grid. These samples represent only a partial sampling of an available population as there is may be a limited number of boreholes or a limited number of cores (e.g., extracted from the boreholes). As a result, the data collected from the samples may be correlated, which includes data that is characterized with a certain degree of correlation. As a result, uncertainty exists because the available partial sample is only a small portion of a larger volume of rock to be characterized (e.g., in an entire region) and the data within the collected sample is correlated, i.e., dependent. Even if the number of samples may be relatively large, because samples are collected from locations that are near each other, the large number of samples may be dependent and also may not be representative of the larger volume to be characterized.

In another embodiment, step 12 of the present method includes inputting a variogram to select a set of independent data from a sample population containing dependent or correlated data. A variogram in a two-dimensional space is generally noted $2\gamma(\delta x,\delta y)$, where $\gamma(\delta x,\delta y)$ is called the semi-variogram. The variogram is a function describing the degree of spatial dependence as a function of separation $(\delta x,\delta y)$ between two points of a spatial random field or stochastic process $Z(x,y)$. The variogram is used at step 16 to create N subsets of property data that are substantially spatially less correlated than the initial set of correlated sample data so as to apply a bootstrap process. N subsets (where N is greater than 2) are needed so as to achieve a statistically meaningful result.

A variogram can be generated from many sources. For example, a variogram can be generated by analyzing the original sample data (e.g., the sample core data) and analyzing the correlation of the sample data as a function of distance $(\delta x,\delta y)$. The variogram can also be generated from conceptual models. In the present case, however, the variogram is generated by analyzing the original sample data correlation with distance. However, as it can be appreciated other methods for generating a variogram can also be used. For example, when the sample data are relatively close they are considered to be dependent but as distance increases the dependency or correlation in the sample data decreases. In other words, the distance is scaled by a variogram. Variogram distance, or correlation length, in one direction may not be equivalent to variogram distance in another direction. In this respect, variograms are ellipsoids in that the variation of the variogram along the east-west direction is different from the variation of the variogram along the north-south direction.

Variograms have a gamma value also called covariance. The gamma value varies from zero to one, when using normal scores. When using a normal score transform such as, for example, the standard deviation, the gamma value is equal to one when normalized by the standard deviation. Hence, it is generally assumed that if gamma values are greater than one then the sample data is considered to be independent. On the other hand, if gamma values are less than one then the sample data is dependent or correlated. The closer the gamma value to zero, the more the sample data is dependent or correlated.

The gamma value threshold can be selected by a user according to the sample data. If the sample data is highly correlated, for example, then selecting a gamma value threshold greater than one would eliminate a great number of data points which would render a bootstrap process on the sample data not useful. On the other hand selecting a gamma value threshold close to zero would leave most the correlated sample data which would also render a bootstrap operation on correlated sample data less useful. Therefore, the gamma value threshold is selected to achieve a compromise so as not to filter out most of the sample data but at the same time select sample data that is not highly correlated so as to obtain a meaningful bootstrap result. Therefore, the gamma value can be selected from the range between zero and approximately one. However, in order to achieve a good compromise, a gamma value between about 0.3 to about 1 can be selected. In the present example, a gamma value of approximately 0.5 is selected as the threshold. Hence, sample data that have a gamma value of less than approximately 0.5 is filtered out while sample data having a gamma value greater than approximately 0.5 (e.g., between approximately 0.5 and 1.0) is used.

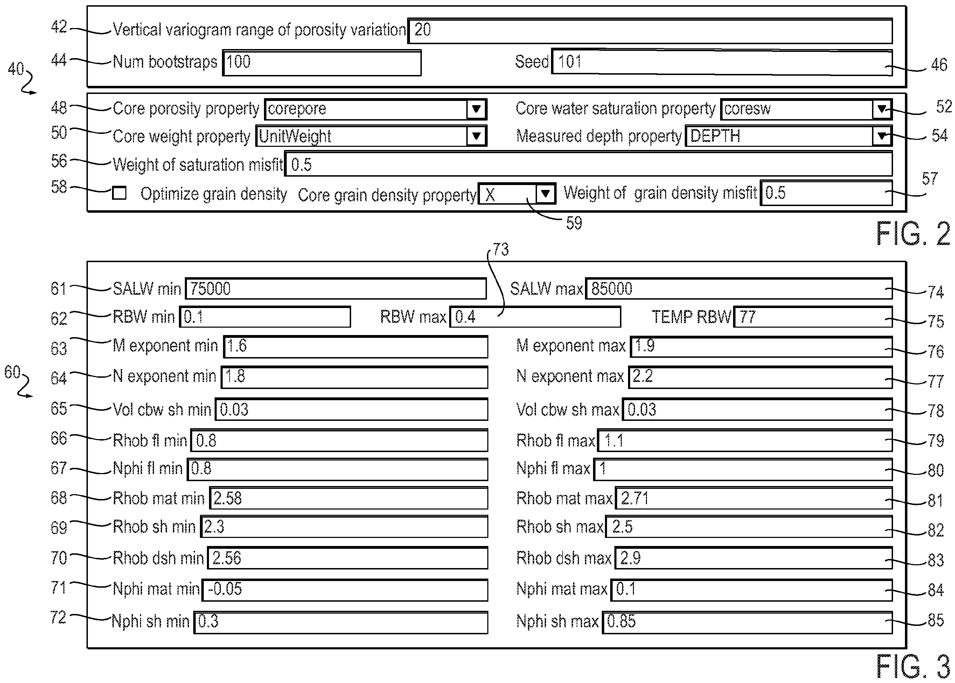

Referring again to FIG. 1, step 16 can be performed by bootstrapping as known by those skilled in the art to yield N "spatially bootstrapped" core data sets. Input correlation length data and/or core reference data can be accessed from a database or other electronic storage media, or provided via user interface 40 as shown in FIG. 2. The parameters and data provided via interface 40 relate generally to uncertainty core calibration. Interface 40 may include input fields for specifying the following parameters: correlation length (also referred to as the vertical variogram range of porosity variation) 42, number of bootstraps 44, seed 46, core porosity property 48, core weight property 50, core water saturation property 52, measured depth property 54, weight of saturation misfit core water saturation property 56, optimize grain density 59 and weight of grain density misfit parameter 57.

In one embodiment , after defining the N subset of substantially spatially less correlated or independent property data using the variogram, step 12, the method of the present invention randomly selects one set of spatially independent property data, step 16. A bootstrap process can be applied to each of the N subsets of spatially independent data, at step 16.

A bootstrap is a name generically applied to statistical resampling schemes that allow uncertainty in the data to be assessed from the data themselves. Bootstrap is generally useful for estimating the distribution of a statistical parameter (e.g., mean, variance) without using normal theory (e.g. z-statistic, t-statistic). Bootstrap can be used when there is no analytical form or normal theory to help estimate the distribution of the statistics of interest because the bootstrap method can apply to most random quantities, for example, the ratio of variance and mean. There are various methods of performing a bootstrap such as by using case resampling including resampling with the Monte Carlo algorithm, parametric bootstrap, resampling residuals, Gaussian process regression bootstrap, etc.

In a resampling approach, for example, given n independent observations $z_i$, where i=1,..., n and a calculated statistical parameter S, for example the mean, the uncertainty in the calculated statistical parameter S (e.g., mean) can be determined using a resampling bootstrap approach. In this case, $n_b$ values of zbj, j=1,...,$n_b$ (where $n_b$ is the number of bootstrap values which is equal to the given number n of independent observations) are drawn from the original data with replacement to obtain a bootstrap resample.

Referring again to FIG. 1, the N subsets of core data generated in step 16 are then used to optimize model parameters used in a reservoir petrophysical model, step 20, in order to match the output of reservoir properties computed by the petrophysical with the very same reservoir properties measured on the selected core data. Any optimization/inversion routine known in the art, such as particle swarm or genetic algorithms, can be used to perform step 20. In one embodiment, the optimization routine uses *a-priori* upper and lower bounds for each model parameter, step 19. Such ranges for the model parameters can be selected by a user interface as shown in FIG.3, and may include model parameters 61-85, for example water salinity, or a subset thereof. The *a-priori* ranges for the model parameters in FIG. 3 are provided solely for purposes of computational efficiency, e.g., CPU time, and to be consistent with basic laws of physics, e.g., grain density cannot be negative. Note that the a-prior ranges do not represent a final distribution of model parameters like in a Monte-Carlo method.

In another embodiment, mineralogical analysis can be used to compute limits for specified model parameters. In accordance with another embodiment, a confidence level or weighting can be assigned in each core measurement, step 18, and applied as a "core weight" to the inverted values. The core weights can be applied to yield more realistic model parameters and a better fit between the reservoir property outputs of the petrophysical model and the reservoir properties measured on the selected core data. Steps 16 and 20 are then iterated M times, step 22, to yield MxN sets of optimized petrophysical model input parameters.

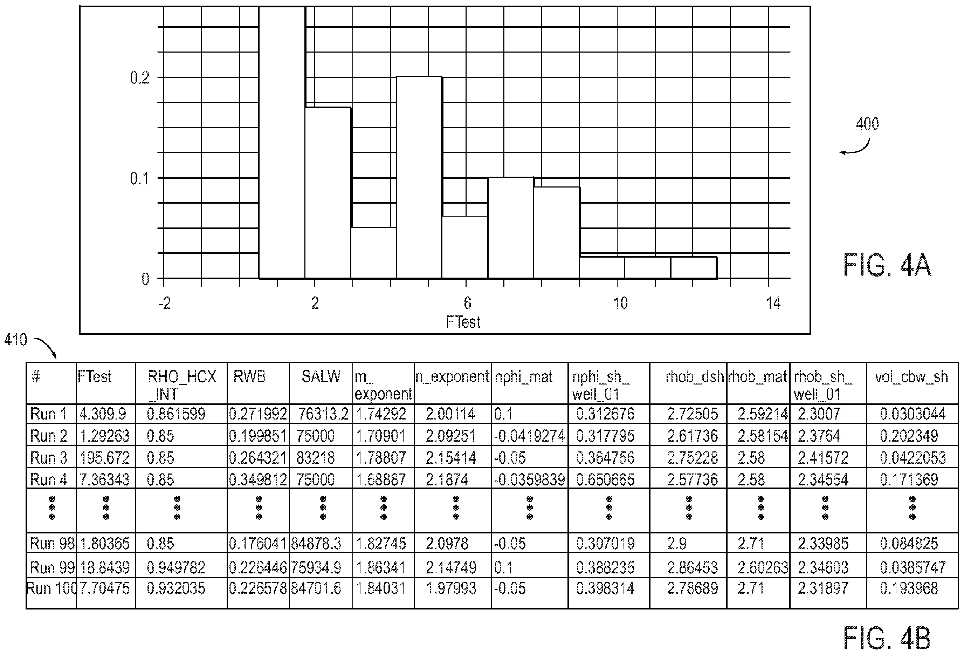

Next, for the MxN set of parameters, i.e., for each run MxN, the method of the present invention includes step 24 of providing a statistical indication, e.g., performing a test for statistic significance, of how good the fit is between the reservoir property outputs of the petrophysical model and the corresponding reservoir properties from the selected core data. An objective is to reject solutions that are poor fits to the petrophysical reference data. In one embodiment, step 24 can be performed by calculating an F-Test. The MxN set of petrophysical model input parameters can be ranked by F-test value (from high quality of confidence to low quality of confidence), step 24. An exemplary listing is shown in FIG. 4b. As described above, step 18 can be used to provide confidence weighting information to automatically select (or deselect) or weight any of the MxN sets of parameters. A parameter may be deselected or selected it is outside a given confidence interval.

Referring again to FIG. 1, the petrophysical model is then run with each of the MxN sets of optimal parameters, i.e., posteriori range of petrophysical model input parameters 25, having (a) an F-Test > 1 and (b) are with a confidence weighting for a given parameter, step 26, to generate selected reservoir output property curves. Next, step 28 is run to compute P10, P50, and P90 reservoir properties from the N selected petrophysical model outputs at each depth by sorting the petrophysical model outputs for each property type and choosing the $10^{th}$, $50^{th}$ and $90^{th}$ percentile values from this sorted list. Alternatively, P10, P50, and P90 reservoir properties can computed from the selected petrophysical model output, over a given interval, by sorting the mean value over an interval of the petrophysical model output for a designated property type to determine which sets of parameters in which of the selected runs created the $10^{th}$, $50^{th}$, and $90^{th}$ percentile values from this sorted list. The petrophysical model output from these P10, P50, and P90 runs, chosen interval by interval, combined over all intervals is the final P10, P50, and P90 petrophysical model.

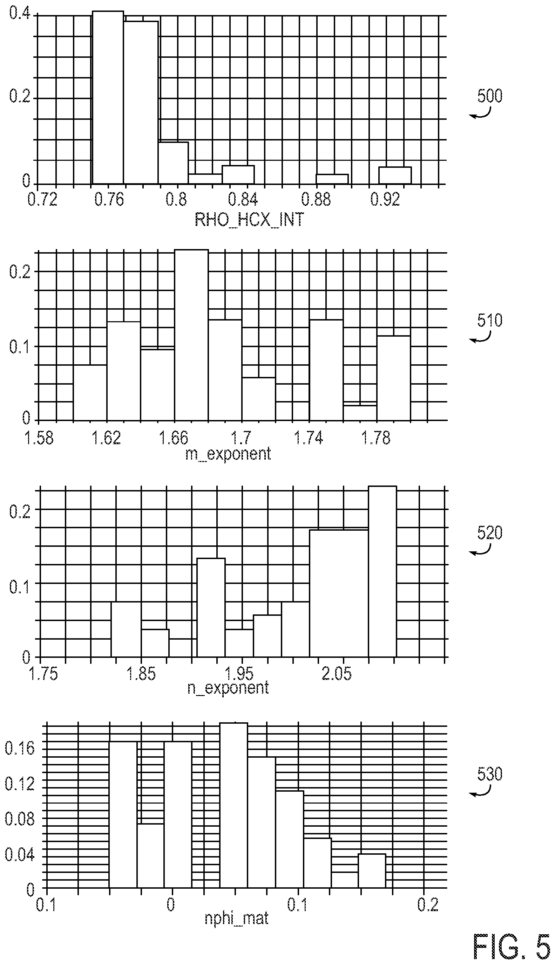

FIGS. 5-7 show final results of the present invention. FIG. 5 is set of histograms 500, 510, 520 and 530 of reservoir model parameters RHO_HCX_INT, m_exponent, n exponent and nphi _mat of the petrophysical model (such as grain density, water salinity, etc) that match the petrophysical reference (core data) within the specified confidence weighting.

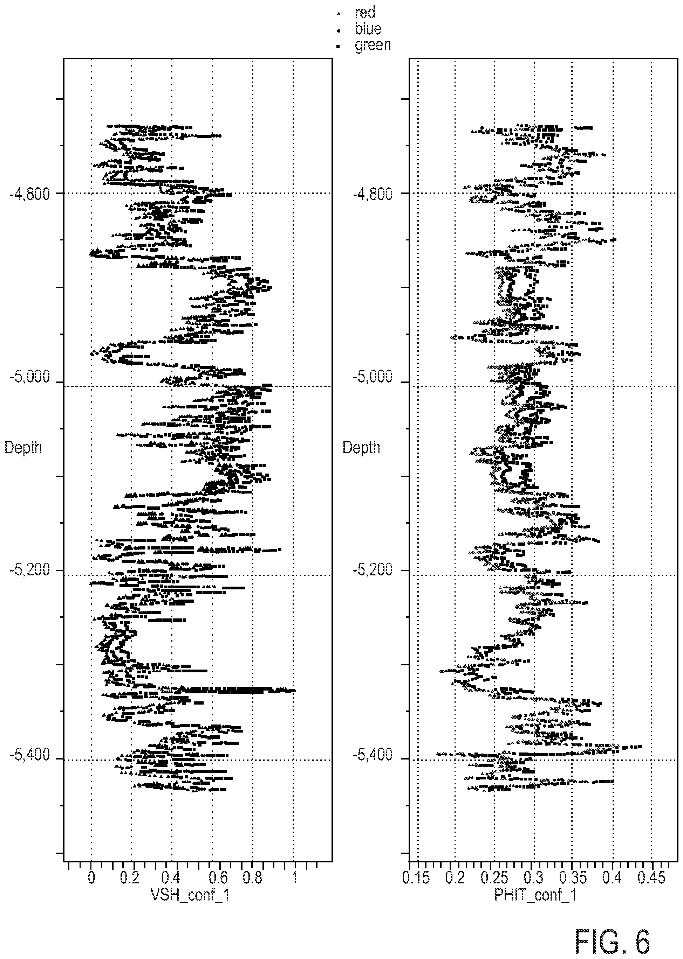

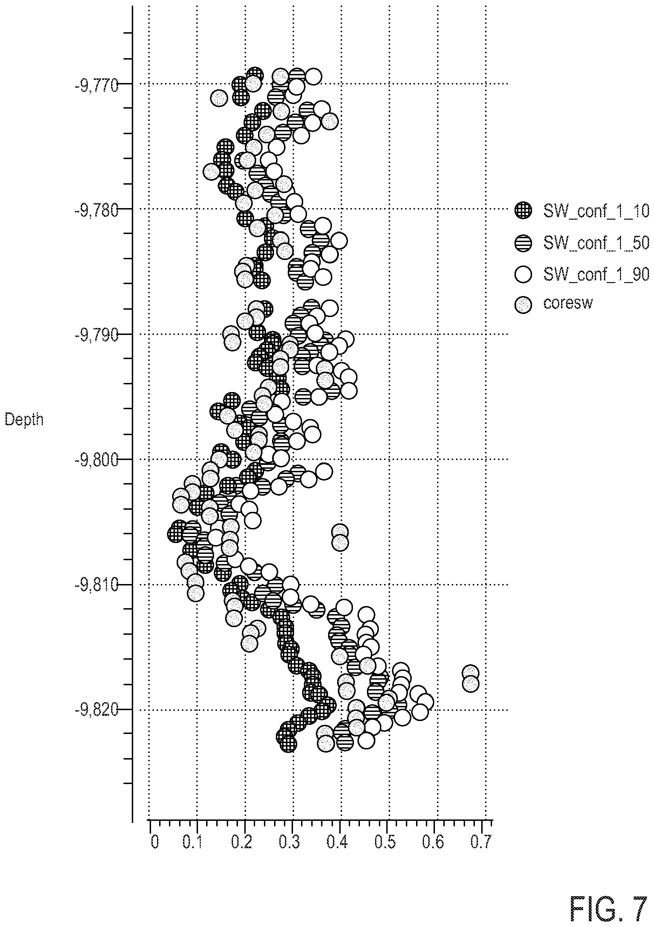

FIG. 6 is set of three well logs for each of reservoir properties PHI_conf_1 and VSH_conf_1 (such as porosity, saturation, etc) coming from the petrophysical model and that represent the P10-P50-P90 among the MxN runs of the petrophysical model ran with the measured well log and the MxN set of parameters. These P10-P50-P90 reservoir properties are therefore within the bounds of the confidence weighting we gave to the core data (ref)]. FIG. 7 is a well log showing that related core samples (denoted by x's) are substantially within the P1P50-P90 distributions.

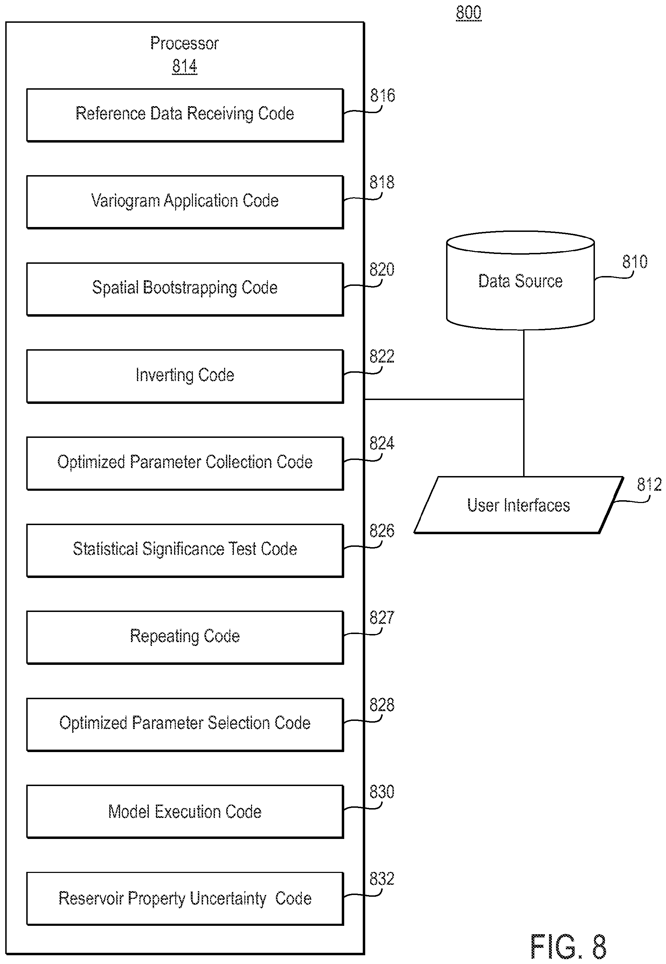

FIG. 8 shows a system 800 for characterizing hydrocarbon reservoir formation evaluation uncertainty. The system includes a data source 810, a user interface 820 and a computer processor 814. The computer processor 814 is operatively in communication with the data source 810 and configured to access the petrophysical reference data and to execute a computer executable code responsive to the petrophysical reference data. In one embodiment, the computer executable code includes ten code or module elements: a first code 816 for accessing the petrophysical reference data; a second code 818 for applying a variogram to the sample petrophysical data to select N subsets of data, where N≥2, the N subsets of data being substantially less correlated than the sample petrophysical data; a third code 820 for applying a spatial bootstrap process on each of the N subsets of data to obtain a plurality of bootstrap data sets from each of the N subsets of data; a fourth code 822 for inverting, each of the N subsets of data, a petrophysical model to generate a set of optimized petrophysical model input parameter values, wherein the inverting code varies model input parameter values for the petrophysical model within user-defined ranges such that output of the petrophysical model matches the petrophysical reference data within a predetermine threshold; a fifth code 824 for collecting the set of optimized petrophysical model input parameters values; a sixth code 826 for performing a statistical significance test on each set of optimized petrophysical model input parameter values; a seventh code 827 for causing the spatial bootstrap process and inverting to be repeated M times to generate MxN sets of optimized petrophysical model input parameter values; an eight code 828 for selecting from MxN sets of optimized petrophysical model input parameter values those sets optimized petrophysical model input parameter values that satisfy at predetermined criteria for the statistical significance test; a ninth code 830 for executing the petrophysical model using the selected sets of optimized petrophysical model input parameter values; and a tenth code 832 for determining selected percentiles representative of selected reservoir uncertainties.

User interfaces 812 may include one or more displays or screens for inputting variogram, reference data, and *a-priori* model input parameter ranges as shown in FIGS. 2 and 3. Interfaces 812 may also include screens for selectively displaying selected percentiles representative of selected reservoir uncertainties.

In addition to the embodiments of the present invention described above, further embodiments of the invention may be devised without departing from the scope thereof as defined in the appended claims. For example, it is to be understood that the present invention contemplates that one or more elements of any embodiment can be combined with one or more elements of another embodiment. It is therefore intended that the embodiments described above be considered illustrative and not limiting, and that the present invention is defined by the appended claims.

## Claims

1. A computer-implemented method (10) for characterizing hydrocarbon reservoir formation evaluation uncertainty, comprising:

inputting (14), into a computer (800), petrophysical reference data comprising substantially spatially correlated data;

choosing (16) N subsets of the petrophysical reference data, where $N \geq 2$, the N subsets each being substantially less spatially correlated than the petrophysical reference data but still representative of the petrophysical reference data;

applying, using the computer (800), a bootstrap process (16) on each of the N subsets to obtain a bootstrap data set from each of the N subsets;

for each of the bootstrap datasets, inverting (20), using the computer (800), a petrophysical model to generate a set of optimized petrophysical model input parameter values, wherein the inverting step comprises varying model input parameter values for the petrophysical model within user-defined ranges such that output of the petrophysical model matches the petrophysical reference data within a predetermined threshold;

collecting, using the computer (800), the set of optimized petrophysical model input parameter values;

performing, using the computer (800), a statistical significance test on each set of optimized petrophysical model input parameter values;

repeating (22), using the computer (800), the bootstrap process (16) and inverting step (20) M times to generate MxN sets of optimized petrophysical model input parameter values;

selecting (24), using the computer, from the MxN sets of optimized petrophysical model input parameter values those sets of optimized petrophysical model input parameter values that satisfy predetermined criteria for statistical significance;

executing (26), using the computer (800), the petrophysical model using each of the selected sets of optimized petrophysical model input parameter values to produce corresponding distributions of values; and

determining (28), using the computer (800), selected percentiles representative of selected reservoir uncertainties from the distributions of values produced by different sets of optimized petrophysical model input parameter values.

2. The computer-implemented method of claim 1, wherein the selection step comprises selecting optimized petrophysical model input parameter values comprising using an F-Test.

3. The computer-implemented method of claim 1, wherein the step of determining selected percentiles representative of selected reservoir uncertainties comprises selecting P10, P50 and P90 percentiles.

4. The computer-implemented method of claim 1, wherein the step of determining spatial correlation is done by variogram analysis.

5. A system (800) for characterizing hydrocarbon reservoir formation evaluation uncertainty:

a data source (810) comprising petrophysical reference data;

a computer processor (814) operatively in communication with the data source (810), the processor (814) configured to access the petrophysical reference data and to execute computer executable code responsive to the petrophysical reference data, the computer executable code comprising:

a first code (816) for accessing the petrophysical reference data;

a second code (818) for applying a variogram to the petrophysical reference data to select N subsets of the petrophysical reference data, where N≥2, the N subsets being substantially less correlated than the petrophysical reference data;

a third code (820) for applying a spatial bootstrap process on each of the N subsets to obtain a bootstrap data set from each of the N subsets;

a fourth code (822) for inverting, for each of the N subsets of data, a petrophysical model to generate a set of optimized petrophysical model input parameter values, wherein the inverting code varies model input parameter values for the petrophysical model within user-defined ranges such that output of the petrophysical model matches the petrophysical reference data within a predetermined threshold;

a fifth code (824) for collecting the set of optimized petrophysical model input parameters values;

a sixth code (826) for performing a statistical significance test on each set of optimized petrophysical model input parameter values;

a seventh code (827) for causing the spatial bootstrap process and inverting to be repeated M times to generate MxN sets of optimized petrophysical model input parameter values;

an eighth code (828) for selecting from the MxN sets of optimized petrophysical model input parameter values those sets optimized petrophysical model input parameter values that satisfy predetermined criteria for the statistical significance test;

a ninth code (830) for executing the petrophysical model using each of the selected sets of optimized petrophysical model input parameter values to produce corresponding distributions of values; and

a tenth code (832) for determining selected percentiles representative of selected reservoir uncertainties from the distributions of values produced by different sets of optimized petrophysical model input parameter values.

6. A computer program comprising instructions which, when executed on a computer (800), causes the computer (800) to carry out the method of any of claims 1 to 4.

7. A computer-readable medium comprising computer executable instructions which, when executed on a computer (800), cause the computer (800) to carry out the method of any of claims 1 to 4.

**Patentansprüche**

1. Rechnerimplementiertes Verfahren (10) zur Charakterisierung von Bewertungsunsicherheit der Kohlenwasserstoffreservoirbildung, umfassend:

Eingeben (14), in einen Rechner (800), von petrophysikalischen Referenzdaten, umfassend im Wesentlichen räumlich korrelierte Daten;

Auswählen (16) von N Teilmengen aus den petrophysikalischen Referenzdaten, wo N ≥ 2 ist, wobei die N Teilmengen jeweils wesentlich weniger korreliert sind, als die petrophysikalischen Referenzdaten, aber immer noch repräsentativ für die petrophysikalischen Daten;

Anwenden, mit Hilfe des Rechners (800), eines Bootstrap-Verfahrens (16) auf jede der N Teilmengen, um ein Bootstrap-Datensatz aus jeder der N Teilmengen zu erhalten;

Invertieren (20), für jeden der Bootstrap-Datensätze, mit Hilfe des Rechners (800), eines petrophysikalischen Modells, um einen Satz optimierter petrophysikalischer Modelleingabeparameterwerte zu erzeugen, worin der Invertierschritt das Variieren der Modelleingabeparameterwerte für das petrophysikalische Modell innerhalb benutzerdefinierter Bereiche umfasst, so dass die Ausgabe des petrophysikalischen Modells mit den petrophysikalischen Referenzdaten innerhalb eines vorbestimmten Schwellenwertes übereinstimmt;

Sammeln, mit Hilfe des Rechners (800), des Satzes optimierter petrophysikalischer Modelleingabeparameterwerte;

Durchführen, mit Hilfe des Rechners (800), eines statistischen Signifikanztests für jeden Satz optimierter petrophysikalischer Modelleingabeparameterwerte;

M-faches Wiederholen (22), mit Hilfe des Rechners (800), des Bootstrap-Verfahrens (16) und Invertierschritts (20), um M x N Sätze optimierter petrophysikalischer Modelleingabeparameterwerte zu erzeugen;

Auswählen (24), mit Hilfe des Rechners, der Sätze optimierter petrophysikalischer Modelleingabeparameterwerte aus den M x N Sätzen optimierter petrophysikalischer Modelleingabeparameterwerte, die vorbestimmte Kriterien für statistische Signifikanz erfüllen;

Ausführen (26), mit Hilfe des Rechners (800), des petrophysikalischen Modells, mit Hilfe jedes der ausgewählten Sätze optimierter petrophysikalischer Modelleingabeparameterwerte, um entsprechende Werteverteilungen zu erzeugen; und

Bestimmen (28), mit Hilfe des Rechners (800), ausgewählter Perzentile, repräsentativ für ausgewählte Reservoirunsicherheiten, aus den Werteverteilungen, erzeugt von unterschiedlichen Sätzen optimierter petrophysikalischer Modelleingabeparameterwerte.

2. Rechnerimplementiertes Verfahren gemäß Anspruch 1, worin der Auswahlschritt Auswählen optimierter petrophysikalischer Modelleingabeparameterwerten umfasst, umfassend Benützen eines F-Tests.

3. Rechnerimplementiertes Verfahren gemäß Anspruch 1, worin der Schritt des Bestimmens ausgewählter Perzentile, repräsentativ für ausgewählte Reservoirunsicherheiten, das Auswählen von P10, P50 und P90 Perzentilen umfasst.

4. Rechnerimplementiertes Verfahren gemäß Anspruch 1, worin der Schritt des Bestimmens räumlicher Korrelation durch Variogramm-Analyse gemacht wird.

5. System (800) zur Charakterisierung von Bewertungsunsicherheit der Kohlenwasserstoffreservoirbildung:

eine Datenquelle (810), umfassend petrophysikalische Referenzdaten;

einen Rechnerprozessor (814), operativ in Kommunikation mit der Datenquelle (810), wobei der Prozessor (814) konfiguriert ist, um auf die petrophysikalischen Referenzdaten zuzugreifen und einen rechnerausführbaren Code auszuführen, der auf die Referenzdaten anspricht, der rechnerausführbare Code umfassend:

einen ersten Code (816) zum Zugreifen auf die petrophysikalischen Referenzdaten;

einen zweiten Code (818) zum Anwenden eines Variogramms auf die petrophysikalischen Referenzdaten, um N Teilmengen petrophysikalischer Referenzdaten auszuwählen, wo $N \geq 2$ ist, wobei die N Teilmengen wesentlich weniger korreliert sind, als die petrophysikalischen Referenzdaten;

einen dritten Code (820) zum Anwenden eines räumlichen Bootstrap-Verfahrens auf jede der N Teilmengen, um einen Bootstrap-Datensatz von jedem der N Teilmengen zu erhalten;

einen vierten Code (822) zum Invertieren, für jeden der N Teilmengen an Daten, eines petrophysikalischen Modells, um einen Satz optimierter petrophysikalischer Modelleingabeparameterwerte zu erzeugen, worin der Invertiercode Modelleingabeparameterwerte für das petrophysikalische Modell innerhalb benutzerdefinierter Bereiche variiert, so dass Ausgabe des petrophysikalischen Modells mit den petrophysikalischen Referenzdaten innerhalb eines vorbestimmten Schwellenwertes übereinstimmt;

einen fünften Code (824) zum Sammeln des Satzes optimierter petrophysikalischer Modelleingabeparameterwerte;

einen sechsten Code (826) zum Durchführen eines statistischen Signifikanztests für jeden Satz optimierter petrophysikalischer Modelleingabeparameterwerte;

einen siebten Code (827) zum Bewirken, dass das räumliche Bootstrap-Verfahren und Invertieren M-fach wiederholt wird, um M x N Sätze optimierter petrophysikalischer Modelleingabeparameterwerte zu erzeugen;

einen achten Code (828) zum Auswählen der Sätze optimierter petrophysikalischer Modelleingabeparameterwerte aus den M x N Sätzen optimierter petrophysikalischer Modelleingabeparameterwerte, die für den statistischen Signifikanztest vorbestimmte Kriterien erfüllen;

einen neunten Code (830) zum Ausführen des petrophysikalischen Modells, mit Hilfe jedes der ausgewählten Sätze optimierter petrophysikalischer Modelleingabeparameterwerte, um entsprechende Werteverteilungen zu erzeugen; und

einen zehnten Code (832) zum Bestimmen ausgewählter Perzentile, repräsentativ für ausgewählte Reservoirunsicherheiten aus den Werteverteilungen, erzeugt aus unterschiedlichen Sätzen optimierter petrophysikalischer Modelleingabeparameterwerte.

6. Rechnerprogramm, umfassend Anweisungen, die, wenn auf einem Rechner (800) ausgeführt, den Rechner (800) dazu veranlassen, das Verfahren aus irgendeinem der Ansprüche 1 bis 4 auszuführen.

7. Rechnerlesbares Medium, umfassend von einem Rechner ausführbare Anweisungen, die, wenn auf einem Rechner (800) ausgeführt, den Rechner (800) dazu veranlassen, das Verfahren aus irgendeinem der Ansprüche 1 bis 4 auszuführen.

**Revendications**

1. Un procédé mis en œuvre par ordinateur (10) pour caractériser l'incertitude d'évaluation de la formation d'un réservoir d'hydrocarbures, comprenant:

   entrer (14), dans un ordinateur (800), des données de référence pétrophysiques comprenant des données sensiblement spatialement corrélées;

   choisir (16) N sous-ensembles des données de référence pétrophysiques, où N ≥ 2, les N sous-ensembles étant chacun sensiblement moins corrélés spatialement que les données de référence pétrophysiques mais toujours représentatifs des données de référence pétrophysiques;

   appliquer, en utilisant l'ordinateur (800), un procédé d'autoamorçage (16) sur chacun des N sous-ensembles pour obtenir un ensemble de données d'autoamorçage à partir de chacun des N sous-ensembles;

   pour chacun des ensembles de données d'autoamorçage, invertir (20), en utilisant l'ordinateur (800), un modèle pétrophysique pour générer un ensemble de valeurs optimisées de paramètres d'entrée de modèle pétrophysique, dans lequel l'étape d'inversion comprend la variation des valeurs des paramètres d'entrée du modèle pétrophysique dans des plages définies par l'utilisateur de sorte que la sortie du modèle pétrophysique correspond aux données de référence pétrophysiques dans un seuil prédéterminé;

   collecter, en utilisant l'ordinateur (800), l'ensemble des valeurs optimisées de paramètres d'entrée de modèle pétrophysique;

   effectuer, en utilisant l'ordinateur (800), un test de signification statistique sur chaque ensemble de valeurs optimisées des paramètres d'entrée du modèle pétrophysique;

   répéter (22), en utilisant l'ordinateur (800), le procédé d'autoamorçage (16) et l'étape d'inversion (20) M fois pour générer M x N ensembles de valeurs optimisées de paramètres d'entrée de modèle pétrophysique;

   sélectionner (24), en utilisant l'ordinateur, parmi M x N ensembles de valeurs optimisées de paramètres d'entrée de modèle pétrophysique ces ensembles optimisées de valeurs de paramètres d'entrée de modèle pétrophysique qui satisfont à des critères prédéterminés de signification statistique;

   exécuter (26), en utilisant l'ordinateur (800), le modèle pétrophysique en utilisant chacun des ensembles sélectionnés de valeurs optimisées de paramètres d'entrée de modèle pétrophysique pour produire des distributions correspondantes de valeurs; et

   déterminer (28), en utilisant l'ordinateur (800), des centiles sélectionnés représentatifs des incertitudes de réservoir sélectionnées des distributions de valeurs produites par différents ensembles de valeurs optimisées de paramètres d'entrée du modèle pétrophysique.

2. Le procédé mis en œuvre par ordinateur selon la revendication 1, dans lequel l'étape de sélection comprend la sélection de valeurs optimisées de paramètres d'entrée de modèle pétrophysique comprenant l'utilisation d'un test F.

3. Le procédé mis en œuvre par ordinateur selon la revendication 1, dans lequel l'étape de détermination des centiles sélectionnés représentatifs des incertitudes des réservoirs sélectionnées comprend la sélection des centiles P10, P50 and P90.

4. Le procédé mis en œuvre par ordinateur selon la revendication 1, dans lequel l'étape de détermination de la corrélation spatiale se fait par analyse de variogramme.

5. Un système (800) pour caractériser l'incertitude d'évaluation de la formation d'un réservoir d'hydrocarbures:

   une source de données (810) comprenant des données de référence pétrophysiques;

   un processeur informatique (814) en communication opérationnelle avec la source de données (810), le processeur (814) étant configuré pour accéder aux données de référence pétrophysiques et pour exécuter un code exécutable par ordinateur en réponse aux données de référence pétrophysiques, le code exécutable par ordinateur comprenant:

   un premier code (816) pour accéder aux données de référence pétrophysiques;

   un deuxième code (818) pour appliquer un variogramme aux données de référence pétrophysiques pour sélectionner N sous-ensembles des données de référence pétrophysiques, où N ≥ 2, les N sous-ensembles étant sensiblement moins corrélés que les données de référence pétrophysiques;

un troisième code (820) pour appliquer un procédé d'autoamorçage spatial sur chacun des N sous-ensembles pour obtenir un ensemble de données d'autoamorçage de chacun des N sous-ensembles;

un quatrième code (822) pour inverser, pour chacun des N sous-ensembles de données, un modèle pétrophysique pour générer un ensemble de valeurs optimisées de paramètre d'entrée de modèle pétrophysique, dans lequel le code inverseur fait varier les valeurs des paramètres d'entrée de modèle pour le modèle pétrophysique dans des plages définies par l'utilisateur de sorte que la sortie du modèle pétrophysique correspond aux données de référence pétrophysiques dans un seuil prédéterminé;

un cinquième code (824) pour collecter l'ensemble des valeurs optimisées des paramètres d'entrée du modèle pétrophysique;

un sixième code (826) pour effectuer un test de signification statistique sur chaque ensemble de valeurs optimisées de paramètres d'entrée de modèle pétrophysique;

un septième code (827) pour faire répéter le procédé d'autoamorçage spatial et inverser M fois pour générer des M x N ensembles de valeurs optimisées de paramètres d'entrée de modèle pétrophysique;

un huitième code (828) pour sélectionner parmi M x N ensembles de valeurs optimisées de paramètres d'entrée de modèle pétrophysique ces ensembles de valeurs optimisées de paramètres d'entrée de modèle pétrophysique qui satisfont à des critères prédéterminés pour le test de signification statistique;

un neuvième code (830) pour exécuter le modèle pétrophysique en utilisant chacun des ensembles sélectionnés de valeurs optimisées de paramètres d'entrée de modèle pétrophysique pour produire des distributions de valeurs correspondantes; et

un dixième code (832) pour déterminer des centiles sélectionnés représentatifs des incertitudes de réservoir sélectionnées des distributions de valeurs produites par différents ensembles de valeurs optimisées de paramètres d'entrée de modèle pétrophysique.

6. Un logiciel informatique comprenant des instructions qui, lors qu'elles sont exécutées sur un ordinateur (800), amènent l'ordinateur (800) à exécuter le procédé selon l'une quelconque des revendications 1 à 4.

7. Un support lisible par ordinateur comprenant des instructions exécutables par ordinateur qui, lors'elles sont exécutées sur un ordinateur (800), amènent l'ordinateur (800) à exécuter le procédé selon l'une quelconque des revendications 1 à 4.

<u>10</u>

FIG. 1

EP 2 707 827 B1

42 — Vertical variogram range of porosity variation | 20 |

40

44 — Num bootstraps | 100 |     Seed | 101 | — 46

48 — Core porosity property | corepore ▼ |     Core water saturation property | coresw ▼ | — 52

50 — Core weight property | UnitWeight ▼ |     Measured depth property | DEPTH ▼ | — 54

56 — Weight of saturation misfit | 0.5 |

58 — ☐ Optimize grain density   Core grain density property | X ▼ | Weight of grain density misfit | 0.5 |   57

59

**FIG. 2**

73

60

| | | | | |
|---|---|---|---|---|
| 61 — SALW min | 75000 | | SALW max | 85000 | — 74 |
| 62 — RBW min | 0.1 | RBW max | 0.4 | TEMP RBW | 77 | — 75 |
| 63 — M exponent min | 1.6 | | M exponent max | 1.9 | — 76 |
| 64 — N exponent min | 1.8 | | N exponent max | 2.2 | — 77 |
| 65 — Vol cbw sh min | 0.03 | | Vol cbw sh max | 0.03 | — 78 |
| 66 — Rhob fl min | 0.8 | | Rhob fl max | 1.1 | — 79 |
| 67 — Nphi fl min | 0.8 | | Nphi fl max | 1 | — 80 |
| 68 — Rhob mat min | 2.58 | | Rhob mat max | 2.71 | — 81 |
| 69 — Rhob sh min | 2.3 | | Rhob sh max | 2.5 | — 82 |
| 70 — Rhob dsh min | 2.56 | | Rhob dsh max | 2.9 | — 83 |
| 71 — Nphi mat min | -0.05 | | Nphi mat max | 0.1 | — 84 |
| 72 — Nphi sh min | 0.3 | | Nphi sh max | 0.85 | — 85 |

**FIG. 3**

13

FIG. 4A

FIG. 4B

410

| # | FTest | RHO_HCX_INT | RWB | SALW | m_exponent | n_exponent | nphi_mat | nphi_sh_well_01 | rhob_dsh | rhob_mat | rhob_sh_well_01 | vol_cbw_sh |
|---|---|---|---|---|---|---|---|---|---|---|---|---|
| Run 1 | 4.309.9 | 0.861599 | 0.271992 | 76313.2 | 1.74292 | 2.00114 | 0.1 | 0.312676 | 2.72505 | 2.59214 | 2.3007 | 0.0303044 |
| Run 2 | 1.29263 | 0.85 | 0.199851 | 75000 | 1.70901 | 2.09251 | -0.0419274 | 0.317795 | 2.61736 | 2.58154 | 2.3764 | 0.202349 |
| Run 3 | 195.672 | 0.85 | 0.264321 | 83218 | 1.78807 | 2.15414 | -0.05 | 0.364756 | 2.75228 | 2.58 | 2.41572 | 0.0422053 |
| Run 4 | 7.36343 | 0.85 | 0.349812 | 75000 | 1.68887 | 2.1874 | -0.0359839 | 0.650665 | 2.57736 | 2.58 | 2.34554 | 0.171369 |
| ⋮ | ⋮ | ⋮ | ⋮ | ⋮ | ⋮ | ⋮ | ⋮ | ⋮ | ⋮ | ⋮ | ⋮ | ⋮ |
| Run 98 | 1.80365 | 0.85 | 0.176041 | 84878.3 | 1.82745 | 2.0978 | -0.05 | 0.307019 | 2.9 | 2.71 | 2.33985 | 0.084825 |
| Run 99 | 18.8439 | 0.949782 | 0.226446 | 75934.9 | 1.86341 | 2.14749 | 0.1 | 0.388235 | 2.86453 | 2.60263 | 2.34603 | 0.0385747 |
| Run 100 | 7.70475 | 0.932035 | 0.226578 | 84701.6 | 1.84031 | 1.97993 | -0.05 | 0.398314 | 2.78689 | 2.71 | 2.31897 | 0.193968 |

FIG. 5

FIG. 6

FIG. 7

800

Processor
814

Reference Data Receiving Code — 816

Variogram Application Code — 818

Spatial Bootstrapping Code — 820

Inverting Code — 822

Optimized Parameter Collection Code — 824

Statistical Significance Test Code — 826

Repeating Code — 827

Optimized Parameter Selection Code — 828

Model Execution Code — 830

Reservoir Property Uncertainty Code — 832

Data Source — 810

User Interfaces — 812

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010299126 A

**Non-patent literature cited in the description**

- **NAEEM ALSHEHRI et al.** Reservoir uncertainty assessment. *CCG Annual Report 11,* 2009

- **GRIGORE ALBEANU.** On using bootstrap approach for uncertainty estimation. *The First International Proficiency Testing Conference,* 11 October 2007